# EUROPEAN PATENT APPLICATION

(11) **EP 4 503 277 A1**
(43) Date of publication of application: **05.02.2025**
(21) Application number: 22957735.8
(22) Date of filing: 08.09.2022
(51) Int. Cl.: H01M 50/15, H01M 50/503, H01M 50/209

(54) **END CAP ASSEMBLY, BATTERY CELL, BATTERY AND ELECTRIC DEVICE**

(71) Applicant: Contemporary Amperex Technology Co., Limited, Fujian 352100 (CN)
(72) Inventor: LEI, Yuyong, NINGDE CITY, Fujian 352100 (CN); GUO, Zhijun, NINGDE CITY, Fujian 352100 (CN); LI, Chuan, NINGDE CITY, Fujian 352100 (CN); YAN, Han, NINGDE CITY, Fujian 352100 (CN); CHEN, Long, NINGDE CITY, Fujian 352100 (CN)
(74) Representative: Herrmann, Uwe
(86) International application number: PCT/CN2022/117850
(87) International publication number: WO 2024/050763

(57) **Abstract**

Embodiments of the present application provide an end cover assembly, a battery cell, a battery and an electrical apparatus. The end cover assembly (10) includes a first cover plate (1), a second cover plate (2) and an anti-rotation device (9). The first cover plate (1) is configured to close a first housing (20), the second cover plate (2) is configured to close a second housing (30), the second cover plate (2) and the first cover plate (1) are arranged opposite to each other in a first direction, and the anti-rotation device (4) is configured to prevent a relative rotation between the first cover plate (1) and the second cover plate (2). The battery cell includes the end cover assembly (10).

## Description

### TECHNICAL FIELD

The present application relates to the technical field of batteries, and particularly to an end cover assembly, a battery cell, a battery and an electrical apparatus.

### BACKGROUND

Energy saving and emission reduction is the key to the sustainable development of automotive industry, electric vehicles have become an important part of the sustainable development of automotive industry due to their advantages of energy saving and environmental protection. For electric vehicles, battery technology is an important factor related to their development.

During the use of a battery, the relative stability of some components is related to the overall quality of the battery; especially for some types of combined battery cells, a shell thereof is generally formed by at least two housings connected end-to-end, and two adjacent shells are connected to each other via an end cover having an integrated structure. Such an end cover usually includes two end cover plates arranged opposite to each other, and the two end cover plates are respectively configured to cover openings of the two adjacent housings. The relative stability between these components directly affects the structural stability of the battery cell.

### SUMMARY OF THE INVENTION

The present application provides an end cover assembly, a battery cell, a battery and an electrical apparatus, which can maintain the relative stability between a first cover plate and a second cover plate, and improve the structural stability of the battery cell.

In a first aspect, the present application provides an end cover assembly, including a first cover plate, a second cover plate and an anti-rotation device, wherein the first cover plate is configured to close a first housing, the second cover plate is configured to close a second housing, and the second cover plate and the first cover plate are arranged opposite to each other in a first direction; and the anti-rotation device is configured to prevent a relative rotation between the first cover plate and the second cover plate.

In these embodiments, with the arrangement of the anti-rotation device between the first cover plate and the second cover plate, it is possible to prevent the relative rotation between the first cover plate and the second cover plate, and maintain the relative stability between the first cover plate and the second cover plate, thereby improving the torsion resistance of the end cover assembly and therefore of the entire battery cell, and improving the structural stability of the battery cell.

In some embodiments, the end cover assembly further includes a first insulating member arranged between the first cover plate and the second cover plate, such that the first cover plate and the second cover plate are insulated from each other.

With the arrangement of the first insulating member, the insulation between the first cover plate and the second cover plate can be realized, and then the first housing closed by the first cover plate and the second housing closed by the second cover plate can be insulated from each other, and are not in communication with each other by means of the first cover plate and the second cover plate.

In some embodiments, the anti-rotation device includes a connecting post, the first cover plate is provided with a first through hole, the second cover plate is provided with a second through hole, one end of the connecting post passes through the first through hole and is configured to be electrically connected to a first electrode assembly in the first housing, the other end of the connecting post the second through hole and is configured to be electrically connected to a second electrode assembly in the second housing, and the connecting post is non-rotatably engaged with the first through hole and the second through hole respectively.

In these embodiments, the connecting post is a component that electrically connects the first electrode assembly to the second electrode assembly, that is, an electrode terminal, which can realize the series connection between the first electrode assembly and the second electrode assembly. In these embodiments, by modifying the structure of the connecting post, and by providing the non-rotatable engagement between the connecting post and the first through hole, the relative rotation between the connecting post and the first cover plate can be prevented; and by providing the non-rotatable engagement between the connecting post and the second through hole, the relative rotation between the connecting post and the second cover plate can be prevented, thereby preventing the relative rotation between the first cover plate and the second cover plate. Therefore, there is no need to add new components for preventing the relative rotation between the first cover plate and the second cover plate, the reduction of the overall weight and volume of the battery cell is facilitated, and the cost can also be saved.

In some embodiments, the part of the connecting post passing through the first through hole and the part of the connecting post passing through the second through holes are respectively square structures, and the first through hole and the second through hole are respectively square holes non-rotatably engaged with the corresponding square structures. Such a configuration can prevent the connecting post from rotating in the first through hole and the second through hole, that is, the purpose of limiting the rotation of the connecting post relative to the first through hole and the second through hole can be achieved, thereby preventing the connecting post from rotating relative to the first cover plate and the second cover plate, so that the connecting post is integrated with a structure non-rotatably engaged with the first cover plate and the second cover plate. The square holes and the square structures are easy to machine, and there is no need to make too many structural changes to the end cover assembly, resulting in low costs.

In some embodiments, the anti-rotation device further includes a first bonding structure and a second bonding structure. The first insulating member is fixedly bonded to the first cover plate via the first bonding structure, and the first insulating member is fixedly bonded to the second cover plate via the second bonding structure.

With the arrangement of the first bonding structure, the bonding connection between the first insulating member and the first cover plate can be realized, so as to maintain the relative fixation between the first insulating member and the first cover plate, and prevent the first insulating member from rotating relative to the first cover plate. With the arrangement of the second bonding structure, the bonding connection between the first insulating member and the second cover plate can be realized, so as to maintain the relative fixation between the first insulating member and the second cover plate, and prevent the first insulating member from rotating relative to the second cover plate, thereby achieving relative stability between the first cover plate and the second cover plate, and preventing the relative rotation between the first cover plate and the second cover plate. The structure is simple and easy to realize.

In some embodiments, one of the first cover plate and the first insulating member has a periphery provided with a first enclosure structure, and the other thereof has a side wall abutting against a side wall of the first enclosure structure to limit a relative rotation between the first cover plate and the first insulating member; and
one of the second cover plate and the first insulating member has a periphery provided with a second enclosure structure, and the other thereof has a side wall abutting against a side wall of the second enclosure structure to limit a relative rotation between the second cover plate and the first insulating member.

With the arrangement of the first enclosure structure, the rotation of the first insulating member relative to the first cover plate can be limited. With the arrangement of the second enclosure structure, the rotation of the first insulating member relative to the second cover plate can be limited, so as to prevent the relative rotation between the first cover plate and the second cover plate, and maintain the relative stability between the first cover plate and the second cover plate, thereby improving the torsion resistance of the end cover assembly and therefore of the entire battery cell, and improving the structural stability of the battery cell.

In some embodiments, the anti-rotation device includes a first anti-rotation portion and a second anti-rotation portion, wherein the first anti-rotation portion is arranged between the first insulating member and the first cover plate and is configured to prevent the relative rotation between the first insulating member and the first cover plate, and the second anti-rotation portion is arranged between the first insulating member and the second cover plate and is configured for the relative rotation between the first insulating member and the second cover plate.

In these embodiments, the arrangement of the first anti-rotation portion between the first insulating member and the first cover plate can prevent the relative rotation between the first insulating member and the first cover plate. The arrangement of the second anti-rotation portion between the first insulating member and the second cover plate can prevent the relative rotation between the first insulating member and the second cover plate. After the relative rotation between the first insulating member and the first cover plate and the relative rotation between the first insulating member and the second cover plate are respectively limited by the first anti-rotation portion and the second anti-rotation portion, the torsion resistance between the first cover plate and the second cover plate is also improved, and the torsion resistance between the first housing connected to the first cover plate and the second housing connected to the second cover plate is thus also improved, so that for the battery cell equipped with the end cover assembly, the relative stability between the first cover plate and the second cover plate can be maintained, the torsion resistance of the entire battery cell can be effectively improved, and the structural stability of the battery cell can be improved.

In some embodiments, one of the first cover plate and the first insulating member is provided with a first groove, the other thereof is provided with the first anti-rotation portion, and the first anti-rotation portion is embedded in the first groove; and
one of the second cover plate and the first insulating member is provided with a second groove, the other thereof is provided with the second anti-rotation portion, and the second anti-rotation portion is embedded in the second groove.

In these embodiments, one of the first cover plate and the first insulating member is provided with the first anti-rotation portion and the other thereof is provided with the corresponding first groove, and one of the first insulating member and the second cover plate is provided with the second anti-rotation portion and the other thereof is provided with the corresponding second groove. Through the engagement between the first anti-rotation portion and the first groove and the engagement between the second anti-rotation portion and the second groove, a better effect of preventing the relative rotation between the first cover plate and the first insulating member and between the first insulating member and the second cover plate is provided.

In some embodiments, in a plane perpendicular to an embedding direction of the first anti-rotation portion, a projection of the first groove and a projection of the second anti-rotation portion are offset from each other.

In these embodiments, the projection of the first groove and the projection of the second anti-rotation portion are offset from each other, so that the engagement structure of the first anti-rotation portion and the first groove and the engagement structure of the second anti-rotation portion and the second groove are dispersed in different positions, thereby increasing the coverage of the anti-rotation device and improving the anti-rotation effect.

In some embodiments, in a plane perpendicular to an embedding direction of the first anti-rotation portion, a projection of the first groove falls within the range of a projection of the second anti-rotation portion.

In these embodiments, the projection of the first groove falls within the range of the projection of the second anti-rotation portion, that is, the first groove is arranged directly below a protruding position of the second anti-rotation portion, and a recessed position of the first groove is exactly opposed to the protruding position of the second anti-rotation portion, so that two concave-convex engagement structures nested with each other can be formed between the first cover plate, the first insulating member and the second cover plate, thereby effectively enhancing the overall strength of the anti-rotation device and improving the anti-rotation effect.

In some embodiments, the first groove is provided on the first insulating member, the second groove is provided on the second cover plate, and the first anti-rotation portion at least partially extends into the second groove in the embedding direction of the first anti-rotation portion.

In these embodiments, at least part of the first anti-rotation portion can extend into the second groove, that is, the depth of the first groove is greater than the thickness of the first insulating member, so that part of the second groove is situated in the first groove, and the second anti-rotation portion is located between a groove wall of the first groove and a groove wall of the second groove. Such an arrangement has the advantages that the first anti-rotation portion engaged with the first groove can also partially enter the second groove, so that the torsional force on the first cover plate can be directly transferred to the second cover plate through the first anti-rotation portion by means of the second anti-rotation portion of the first insulating member, thereby reducing the strength requirements for the first insulating member and allowing the thickness of the first insulating member to be appropriately reduced.

In some embodiments, in the embedding direction of the first anti-rotation portion, the part of the first anti-rotation portion that extends into the second groove has an extension dimension greater than or equal to 0.2 mm.

In these embodiments, the part of the first anti-rotation portion that extends into the second groove has an extension dimension greater than or equal to 0.2 mm, that is, the difference between the depth of the first groove and the thickness of the first insulating member is greater than or equal to 0.2 mm, so that the torsional force on the first cover plate can be directly transferred to the second cover plate through the first anti-rotation portion, thereby improving the effects of force transfer and anti-rotation.

In a second aspect, the present application provides a battery cell, including the end cover assembly described above.

In a third aspect, the present application provides a battery, including a box and the battery cell described above, wherein the battery cell is arranged in the box, and the battery cell is configured to supply electric energy.

In a fourth aspect, the present application provides an electrical apparatus, including the battery cell described above, the battery cell being configured to supply electric energy to the electrical apparatus; or including the battery described above, the battery being configured to supply electric energy to the electrical apparatus.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural diagram of an electrical apparatus disclosed in some embodiments of the present application;
Fig. 2 is a schematic structural diagram of a battery disclosed in some embodiments of the present application;
Fig. 3 is an exploded view of a battery cell disclosed in some embodiments of the present application;
Fig. 4 is a schematic structural diagram of a battery cell disclosed in some embodiments of the present application;
Fig. 5 is an exploded view of an end cover assembly disclosed in some embodiments of the present application;
Fig. 6 is a top view of an end cover assembly disclosed in some embodiments of the present application in an assembled state;
Fig. 7 is a cross-sectional view along the section A-A in Fig. 6;
Fig. 8 is a cross-sectional view of the interior of an end cover assembly disclosed in some embodiments of the present application;
Fig. 9 is an exploded view of an end cover assembly disclosed in some other embodiments of the present application;
Fig. 10 is a top view of an end cover assembly disclosed in some other embodiments of the present application in an assembled state;
Fig. 11 is a cross-sectional view along the section B-B in Fig. 10;
Fig. 12 is an exploded view of an end cover assembly disclosed in still some other embodiments of the present application;
Fig. 13 is a side view of a battery cell disclosed in some embodiments of the present application;
Fig. 14 is a cross-sectional view along the section C-C in Fig. 13;
Fig. 15 is an exploded view of the end cover assembly in the embodiments of Figs. 13 and 14;
Fig. 16 is a top view of the end cover assembly in the embodiments of Figs. 13 and 14;
Fig. 17 is a cross-sectional view along the section D-D in Fig. 16;
Fig. 18 is an enlarged view of part E in Fig. 17;
Fig. 19 is an exploded view of an end cover assembly disclosed in yet some other embodiments of the present application;
Fig. 20 is a top view of an end cover assembly disclosed in yet some other embodiments of the present application; and
Fig. 21 is a cross-sectional view along the section F-F in Fig. 12.

In the accompanying drawings, the figures are not necessarily drawn to scale.

List of reference signs:
1000, vehicle; 100, battery; 200, axle; 300, wheel; 400, motor; 500, controller;
101, battery cell; 102, box; 102a, box body; 102b, cover body;
10, end cover assembly; 20, first housing; 30, second housing; 40, first electrode assembly; 40a, first tab; 50, second electrode assembly; 50a, second tab; 60, first end cover assembly; 70, second end cover assembly;
1, first cover plate; 1a, first bonding structure; 11, first through hole; 12, first enclosure; 13, second protrusion; 2, second cover plate; 2a, second bonding structure; 21, second through hole; 22, fourth protrusion; 23, third enclosure; 3, first insulating member; 31, third through hole; 32, first protrusion; 33, fourth enclosure; 34, third protrusion; 35, second enclosure; 4, first conductive member; 41, connecting post; 42, limiting portion; 5, second conductive member; 51, fourth through hole; 6, second insulating member; 61, fifth through hole; 7, third insulating member; 71, sixth through hole; 81, first seal; 82, second seal; 9, anti-rotation device; 91, first anti-rotation portion; 92, first groove; 93, second anti-rotation portion; 94, second groove.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms " including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. Furthermore, the term "perpendicular" is not strictly perpendicular, but within the allowable range of errors. Furthermore, the term "parallel" is not strictly parallel, but within the allowable range of error.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" means two or more, unless otherwise explicitly and specifically defined. Similarly, "plurality of sets" means two or more sets, and "plurality of pieces" means two or more pieces, unless specifically and specifically limited otherwise.

In the description of the embodiments of the present application, the orientation or location relationships indicated by the technical terms "center", "longitudinal", "transverse", "length ", "width", "thickness", "up", "down", "front", "back", "left", "right", "vertical", "horizontal", "top", "bottom", "inside", "outside", "clockwise", "counterclockwise", "axial", " radial", "circumferential" and the like are based on the orientation or location relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, or may be a communication within two elements or an interactive relationship between two elements. For those of ordinary skill in the art, the specific meanings of the above terms in the embodiments of the present application can be understood according to specific situations.

At present, from the development of market situation, application of traction batteries is becoming more and more extensive. Power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The inventors of the present application have noticed that with the continuous expansion of the application range of power batteries, the demand for the battery capacity of various electrical apparatus is also increasing. In order to increase the battery capacity as much as possible within a limited storage space, people began to configure a battery cell in a structural form including two electrode assemblies. The two electrode assemblies are connected in series, so that it is possible to omit some intermediate electrical connection components, and also save some space for the battery, thereby providing support for increasing the battery capacity.

Due to the inclusion of two electrode assemblies, the length of the battery cell is longer than that of a battery cell including one electrode assembly. Therefore, during use, the battery cell may be subjected to lateral shear forces such that the two electrode assemblies are relatively twisted, which may cause problems such as leakage of the electrode assemblies, affecting the overall quality and use safety of the battery cell.

The inventors have found through research that an anti-rotation device may be provided between a first cover plate and a second cover plate to prevent a relative torsion between the first cover plate and the second cover plate, thereby improving the torsion resistance of the end cover assembly and therefore of the entire battery cell, and preventing the leakage of the electrode assemblies, which may cause safety accidents.

The end cover assembly described in the embodiments of the present application is suitable for battery cells, batteries, and electrical apparatus using batteries.

The electrical apparatus may be, for example, a mobile phone, a portable apparatus, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

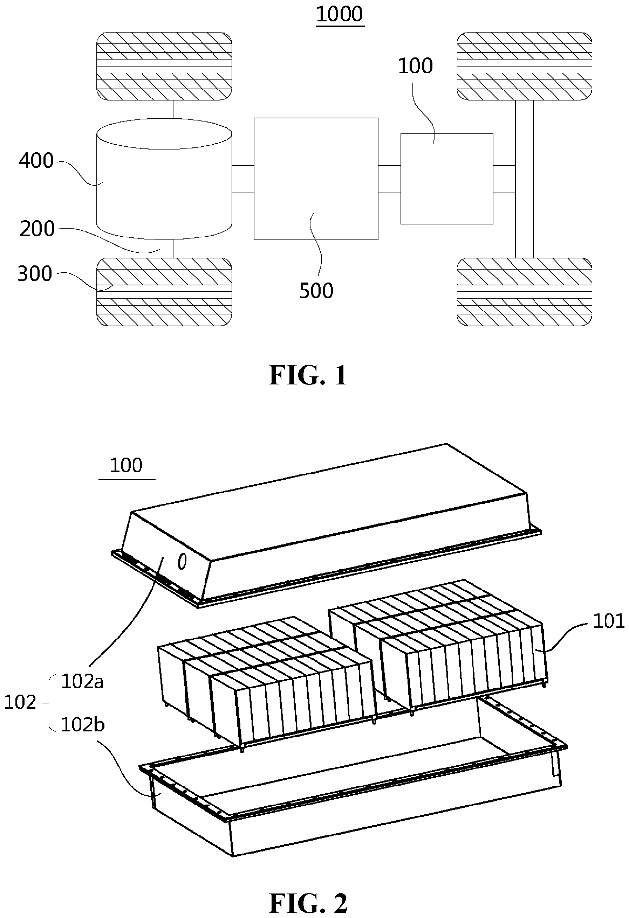

As shown in Fig. 1, the electrical apparatus may be a vehicle 1000, for example, a new energy vehicle. The new energy vehicle may be an all-electric vehicle, a hybrid electric vehicle, an extended-range electric vehicle, or the like. Alternatively, the electrical apparatus may be an unmanned aerial vehicle, a ship, or the like. Specifically, the vehicle 1000 may include a battery 100, an axle 200, wheels 300 connected to the axle 200, a motor 400, and a controller 500. The controller 500 is configured to control the operation of the motor 400, the motor 400 is configured to drive the axle 200 to rotate, and the rotation of the axle 200 drives the wheels 300 to rotate. The battery 100 may be arranged at the bottom, head or tail of the vehicle 1000 to supply electric energy for the operation of the motor 400 and other components in the vehicle.

As shown in Fig. 2, the battery 100 includes a battery cell 101 and a box 102. There may be one or more battery cells 101 in the battery 100. If there are a plurality of battery cells 101, the multiple battery cells 101 may be connected in series or in parallel or in series-parallel. The series-parallel connection means that some of the plurality of battery cells 101 are connected in series and the rest are connected in parallel. It is possible that the plurality of battery cells 101 are first connected in series or in parallel or in series-parallel to form a plurality of battery modules, and then the battery modules are connected in series or in parallel or in series-parallel to form a whole and received in the box 102. It is also possible that all the battery cells 101 are directly connected in series or in parallel or in series-parallel, and then an entirety composed of all the battery cells 101 is received in the box 102.

The interior of the box 102 is a hollow structure. For example, the box 102 may include a box body 102a and a cover body 102b. The box body 102a and the cover body 102b are fastened together. For example, the box body 102a and the cover body 102b each may be a hollow cuboid and each have only one surface with an opening, and the opening of the box body 102a is arranged opposite the opening of the cover body 102b, and the box body 102a and the cover body 102b are fastened to each other to form the box body with a closed chamber. It is also possible that the box body 102a is a cuboid having an opening while the cover body 102b is plate-shaped, or the cover body 102b is a cuboid having an opening while the box body 102a is plate-shaped, and the box body 102a and the cover body 102b are arranged opposite each other, and are fastened to each other to form the box 102 with a closed chamber. At least one battery cell 101 is assembled in parallel connection or series connection or series-parallel connection, and then placed in the closed chamber formed by fastening the box body 102a to the cover body 102b.

The battery cell 101 includes a lithium-ion secondary battery, a lithium-ion primary battery, a lithium sulfur battery, a sodium lithium-ion battery, a sodium-ion battery or a magnesium-ion battery and so on, which will not be limited in the embodiments of the present disclosure. The battery cell may be cylindrical, flat, cuboid or in another shape, which will not be limited by the embodiments of the present disclosure. The battery cells are generally classified into three types depending on the way of package: cylindrical battery cells, prismatic battery cells and pouch battery cells, which will also not be limited in the embodiments of the present disclosure.

In order to enable the improvement principle of the battery cell of the present application to be understood more clearly, the structure of the end cover assembly is described in detail first.

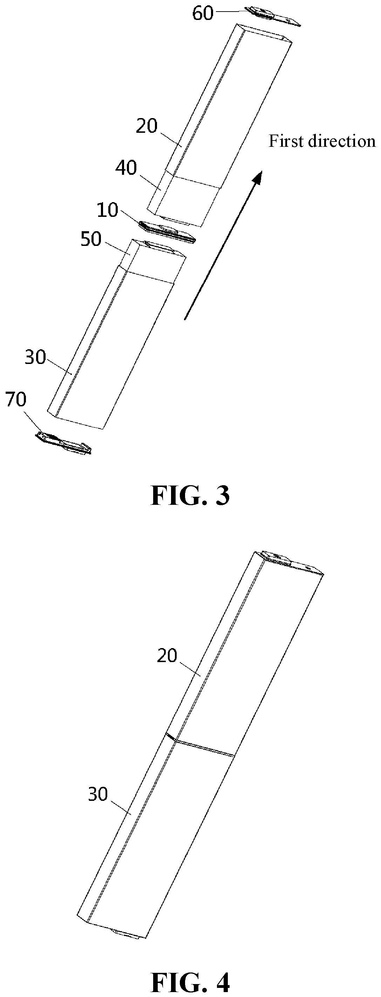

In some embodiments, as shown in Figs. 3 and 4, the battery cell includes an end cover assembly 10, a first housing 20, a second housing 30, a first electrode assembly 40, a second electrode assembly 50, a first end cover assembly 60 and second end cover assembly 70.

The first housing 20 and the second housing 30 both have openings, the first electrode assembly 40 is received inside the first housing 20, and the second electrode assembly 50 is received inside the second housing 30.

The opening of the first housing 20 is arranged opposite the opening of the second housing 30, and the end cover assembly 10 is arranged between the first housing 20 and the second housing 30. The first end cover assembly 60 is arranged at one end of the first housing 20 that is away from the opening thereof, and the second end cover assembly 70 is arranged at one end of the second housing 30 that is away from the opening thereof.

An electrolytic solution is filled in the first housing 20 and the second housing 30 respectively. The first electrode assembly 40 and the second electrode assembly 50 each may be formed by stacking or winding a first electrode plate and a second electrode plate with opposite polarities, and a separator is generally provided between the first electrode plate and the second electrode plate. Coated parts of the first electrode plate and the second electrode plate constitute main bodies of the first electrode assembly 40 and the second electrode assembly 50, and uncoated parts of the first electrode plate and the second electrode plate respectively constitute two tabs with opposite polarities.

The first housing 20 and the second housing 30 may have various shapes and sizes, such as a cuboid, a cylinder and a hexagonal prism. Specifically, the first housing 20 and the second housing 30 may be shaped according to the specific shapes and sizes of the first electrode assembly 40 and the second electrode assembly 50. The first housing 20 and the second housing 30 may be made of various materials, such as copper, iron, aluminum, stainless steel, an aluminum alloy, and plastic, which will not be specially limited in the embodiments of the present application.

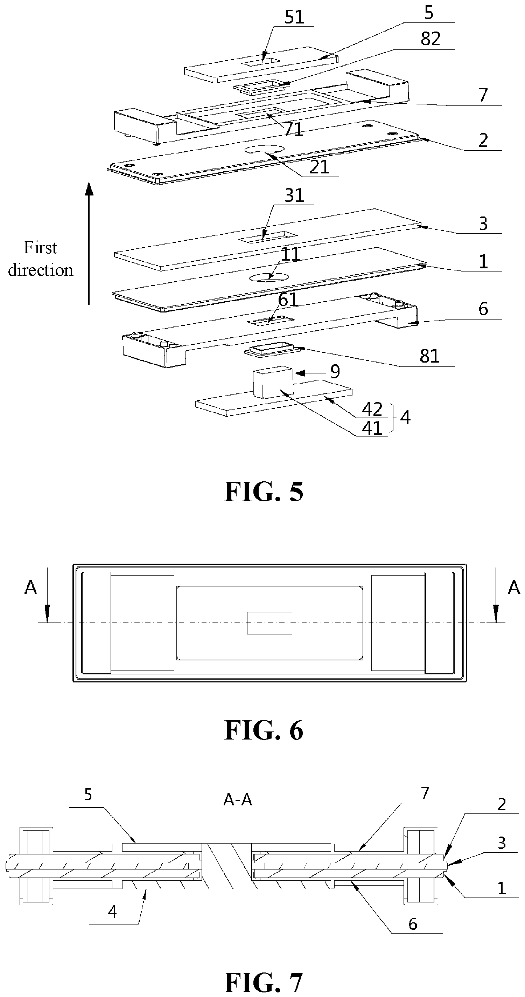

Referring to Fig. 5, in some embodiments of the present application, the end cover assembly 10 includes a first cover plate 1, a second cover plate 2 and an anti-rotation device 9. The first cover plate 1 is configured to close a first housing 20, the first housing 20 is configured to receive a first electrode assembly 40, the second cover plate 2 is configured to close a second housing 30, the second housing 30 is configured to receive a second electrode assembly 50, the second cover plate 2 and the first cover plate 1 are arranged opposite to each other in a first direction so as to arrange the first housing 20 and the second housing 30 in the first direction, and the anti-rotation device 9 is configured to prevent a relative rotation between the first cover plate 1 and the second cover plate.

The first direction is a direction perpendicular to the first cover plate 1 and the second cover plate 2.

In these embodiments, with the arrangement of the anti-rotation device 9 between the first cover plate 1 and the second cover plate 2, it is possible to prevent the relative rotation between the first cover plate 1 and the second cover plate 2, and maintain the relative stability between the first cover plate 1 and the second cover plate 2, thereby improving the torsion resistance of the end cover assembly and therefore of the entire battery cell, and improving the structural stability of the battery cell.

With the arrangement of the anti-rotation device 9, it is also possible to prevent the relative rotation between the first cover plate 1 and the second cover plate 2 from affecting the sealing performance of the first housing 20 and the second housing 30, preventing the leakage of the electrode assemblies, which may cause safety accidents.

As shown in Fig. 5, in some embodiments, the end cover assembly further includes a first insulating member 3 arranged between the first cover plate 1 and the second cover plate 2, such that the first cover plate 1 and the second cover plate 2 are insulated from each other.

With the arrangement of the first insulating member 3, the insulation between the first cover plate 1 and the second cover plate 2 can be realized, and then the first housing 20 closed by the first cover plate 1 and the second housing 30 closed by the second cover plate 2 can be insulated from each other, and are not in communication with each other by means of the first cover plate 1 and the second cover plate 2.

In some embodiments, the anti-rotation device 9 comprises a connecting post 41, the first cover plate 1 is provided with a first through hole 11, the second cover plate 2 is provided with a second through hole 21, one end of the connecting post 41 passes through the first through hole 11 and is configured to be electrically connected to a first electrode assembly 40 in the first housing 20, the other end of the connecting post 41 the second through hole 21 and is configured to be electrically connected to a second electrode assembly 50 in the second housing 30, and the connecting post 41 is non-rotatably engaged with the first through hole 11 and the second through hole 21 respectively.

In these embodiments, the connecting post 41 is a component that electrically connects the first electrode assembly 40 to the second electrode assembly 50, that is, an electrode terminal, which can realize the series connection between the first electrode assembly 40 and the second electrode assembly 50. In these embodiments, by modifying the structure of the connecting post 41, and by providing the non-rotatable engagement between the connecting post 41 and the first through hole 11, the relative rotation between the connecting post 41 and the first cover plate 1 can be prevented; and by providing the non-rotatable engagement between the connecting post 41 and the second through hole 21, the relative rotation between the connecting post 41 and the second cover plate 2 can be prevented, thereby achieving the purpose of preventing the relative rotation between the first cover plate 1 and the second cover plate 2. Therefore, there is no need to add new components for preventing the relative rotation between the first cover plate 1 and the second cover plate 2, and the reduction of the overall weight and volume of the battery cell is facilitated, and the cost can also be saved.

There are many options for the specific implementations of providing the non-rotatable engagement between the connecting post 41 and the first through hole 11 and providing the non-rotatable engagement between the connecting post 41 and the second through hole 21. For example, the connecting post 41 may be bonded to a hole wall of the first through hole 11, the connecting post 41 may be bonded to a hole wall of the second through hole 21, and so on.

In some embodiments, the part of the connecting post 41 passing through the first through hole 11 and the part of the connecting post 41 passing through the second through holes 21 are respectively square structures, and the first through hole 11 and the second through hole 21 are respectively square holes non-rotatably engaged with the corresponding square structures.

In the embodiments shown in Figs. 5 to 7, the connecting post 41 is a square structure, and the first through hole 11 and the second through hole 21 are both square holes. Such a configuration can prevent the connecting post 41 from rotating in the first through hole 11 and the second through hole 21, that is, the purpose of limiting the rotation of the connecting post 41 relative to the first through hole 11 and the second through hole 21 can be achieved, thereby preventing the connecting post 41 from rotating relative to the first cover plate 1 and the second cover plate 2, so that the connecting post 41 is integrated with a structure non-rotatably engaged with the first cover plate 1 and the second cover plate 2. The square holes and the square structure are easy to machine, and there is no need to make too many structural changes to the end cover assembly, resulting in low costs.

In other embodiments, it is also possible that the connecting post 41 is a triangular prism, and the first through hole 11 and the second through hole 21 are both triangular holes; or the connecting post 41 is a pentagonal prism, and the first through hole 11 and the second through hole 21 are both pentagonal holes, and so on.

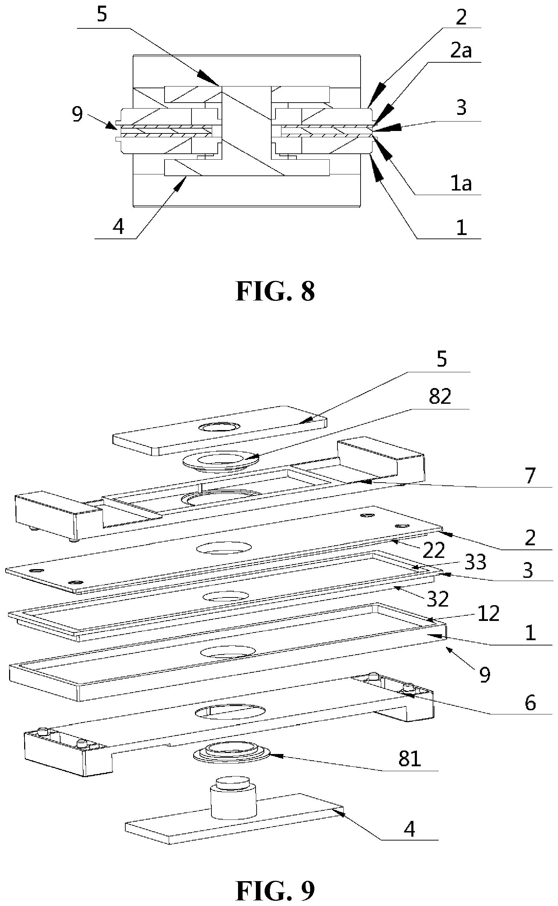

As shown in Fig. 8, in some embodiments, the anti-rotation device 9 includes a first bonding structure 1a and a second bonding structure 2a. The first insulating member 3 is fixedly bonded to the first cover plate 1 via the first bonding structure 1a, and the first insulating member 3 is fixedly bonded to the second cover plate 2 via the second bonding structure 2a.

With the arrangement of the first bonding structure 1a, the bonding connection between the first insulating member 3 and the first cover plate 1 can be realized, so as to maintain the relative fixation between the first insulating member 3 and the first cover plate 1, and prevent the first insulating member 3 from rotating relative to the first cover plate 1. With the arrangement of the second bonding structure 2a, the bonding connection between the first insulating member 3 and the second cover plate 2 can be realized, so as to maintain the relative fixation between the first insulating member 3 and the second cover plate 2, and prevent the first insulating member 3 from rotating relative to the second cover plate 2, thereby achieving relative stability between the first cover plate 1 and the second cover plate 2, and preventing the relative rotation between the first cover plate 1 and the second cover plate 2. The structure is simple and easy to realize.

The first bonding structure 1a and the second bonding structure 2a may use adhesives and the like.

As shown in Figs. 9 to 12, in some embodiments, one of the first cover plate 1 and the first insulating member 3 has a periphery provided with a first enclosure structure, and the other thereof has a side wall abutting against a side wall of the first enclosure structure to limit a relative rotation between the first cover plate 1 and the first insulating member 3; and
one of the second cover plate 2 and the first insulating member 3 has a periphery provided with a second enclosure structure, and the other thereof has a side wall abutting against a side wall of the second enclosure structure to limit a relative rotation between the second cover plate 2 and the first insulating member 3.

With the arrangement of the first enclosure structure, the rotation of the first insulating member 3 relative to the first cover plate 1 can be limited. With the arrangement of the second enclosure structure, the rotation of the first insulating member 3 relative to the second cover plate 2 can be limited, so as to prevent the relative rotation between the first cover plate 1 and the second cover plate 2, and maintain the relative stability between the first cover plate 1 and the second cover plate 2, thereby improving the torsion resistance of the end cover assembly and therefore of the entire battery cell, and improving the structural stability of the battery cell.

In some embodiments, the first enclosure structure includes a first enclosure 12 and a second enclosure 35. The first enclosure 12 is arranged at an edge of the first cover plate 1 in a circumferential direction of the first cover plate 1, and the first insulating member 3 is at least partially received in a recess formed by the combination of the first enclosure 12 and the first cover plate 1, to limit the relative rotation between the first cover plate 1 and the first insulating member 3. The second enclosure 35 is arranged at an edge of the first insulating member 3 in a circumferential direction of the first insulating member 3, and the first cover plate 1 is at least partially received in a recess formed by the combination of the second enclosure 35 and the first insulating member 3, to limit the relative rotation between the first cover plate 1 and the first insulating member 3.

As shown in Figs. 9 to 11, the first enclosure 12 is arranged at the edge of the first cover plate 1 in the circumferential direction of the first cover plate 1 and extends from the first cover plate 1 in a direction approaching the first insulating member 3, the combination of the first enclosure 12 and the first cover plate 1 forms a recess with a receiving space, the first insulating member 3 includes a first protrusion 32, and the first protrusion 32 is received in the recess formed by the combination of the first enclosure 12 and the first cover plate 1.

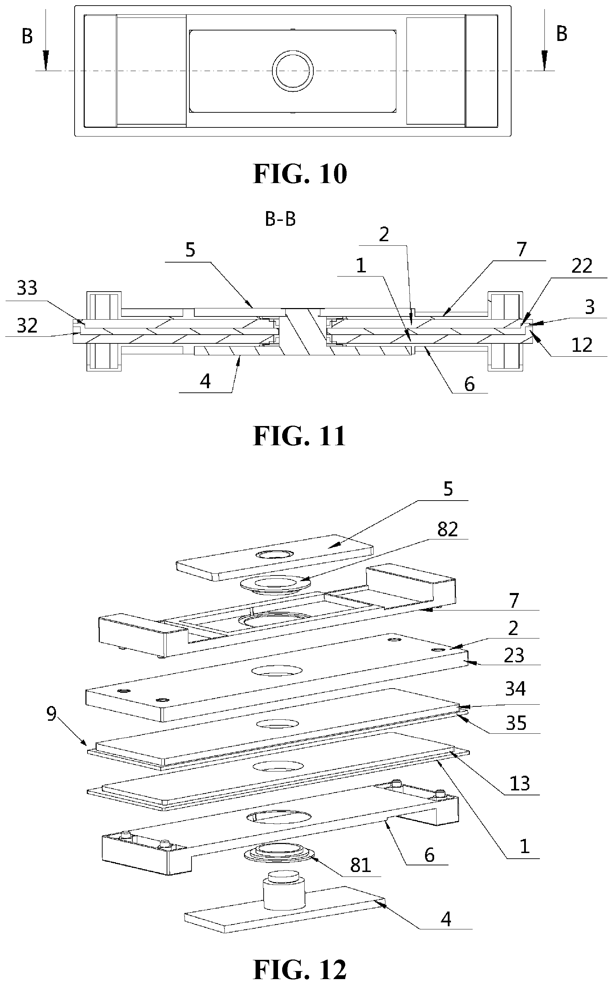

As shown in Fig. 12, the second enclosure 35 is arranged at the edge of the first insulating member 3 in the circumferential direction of the first insulating member 3 and extends from the first insulating member 3 in a direction approaching the first cover plate 1, the combination of the second enclosure 35 and the first insulating member 3 forms a recess with a receiving space, the first cover plate 1 includes a second protrusion 13, and the second protrusion 13 is received in the recess formed by the combination of the second enclosure 35 and the first insulating member 3.

With the arrangement of the first enclosure 12, at least part of the first insulating member 3 can be received in the recess formed by the combination of the first enclosure 12 and the first cover plate 1, so that the rotation of the first insulating member 3 relative to the first cover plate 1 is limited by the first enclosure 12. Alternatively, with the arrangement of the second enclosure 35, at least part of the first cover plate 1 can be received in the recess formed by the combination of the second enclosure 35 and the first insulating member 3, so that the rotation of the first insulating member 3 relative to the first cover plate 1 is limited by the second enclosure 35.

In some embodiments, the recess formed by the combination of the first enclosure 12 and the first cover plate 1 is non-rotatably engaged with the first protrusion 32. For example, the first enclosure 12 is a square structure, the combination of the first enclosure 12 and the first cover plate 1 forms a square receiving space, and the first protrusion 32 is square, so the first enclosure 12 can limit the rotation of the first insulating member 3 relative to the first cover plate 1. The recess formed by the combination of the second enclosure 35 and the first insulating member 3 is non-rotatably engaged with the second protrusion 13. For example, the second enclosure 35 is a square structure, and the combination of the second enclosure 35 and the first insulating member 3 forms a square receiving space, and the second protrusion 13 is square, so the second enclosure 35 can limit the rotation of the first insulating member 3 relative to the first cover plate 1.

In some embodiments, the second enclosure structure includes a third enclosure 23 and a fourth enclosure 33. The third enclosure 23 is arranged at an edge of the second cover plate 2 in a circumferential direction of the second cover plate 2, and the first insulating member 3 is at least partially received in a recess formed by the combination of the third enclosure 23 and the second cover plate 2, to limit the relative rotation between the second cover plate 2 and the first insulating member 3. The fourth enclosure 33 is arranged at an edge of the first insulating member 3 in a circumferential direction of the first insulating member 3, and the second cover plate 2 is at least partially received in a recess formed by the combination of the fourth enclosure 33 and the first insulating member 3, to limit the relative rotation between the second cover plate 2 and the first insulating member 3.

As shown in Fig. 12, the third enclosure 23 is arranged at the edge of the second cover plate 2 in the circumferential direction of the second cover plate 2 and extends from the second cover plate 2 in a direction approaching the first insulating member 3, the combination of the third enclosure 23 and the second cover plate 2 forms a recess with a receiving space, the first insulating member 3 includes a third protrusion 34, and the third protrusion 34 is received in the recess formed by the combination of the third enclosure 23 and the second cover plate 2.

As shown in Figs. 9 to 11, the fourth enclosure 33 is arranged at the edge of the first insulating member 3 in the circumferential direction of the first insulating member 3 and extends from the first insulating member 3 in a direction approaching the second cover plate 2, the combination of the fourth enclosure 33 and the first insulating member 3 forms a recess with a receiving space, the second cover plate 2 includes a fourth protrusion 22, and the fourth protrusion 22 is received in the recess formed by the combination of the fourth enclosure 33 and the first insulating member 3.

With the arrangement of the third enclosure 23, at least part of the first insulating member 3 can be received in the recess formed by the combination of the third enclosure 23 and the second cover plate 2, so that the rotation of the first insulating member 3 relative to the second cover plate 2 is limited by the third enclosure 23. Alternatively, with the arrangement of the fourth enclosure 33, at least part of the second cover plate 2 can be received in the recess formed by the combination of the fourth enclosure 33 and the first insulating member 3, so that the rotation of the first insulating member 3 relative to the second cover plate 2 is limited by the fourth enclosure 33.

In some embodiments, the recess formed by the combination of the third enclosure 23 and the second cover plate 2 is non-rotatably engaged with the third protrusion 34. For example, the third enclosure 23 is a square structure, the combination of the third enclosure 23 and the second cover plate 2 forms a square receiving space, and the third protrusion 34 is square, so the third enclosure 23 can limit the rotation of the first insulating member 3 relative to the second cover plate 2. The recess formed by the combination of the fourth enclosure 33 and the first insulating member 3 is non-rotatably engaged with the fourth protrusion 22. For example, the fourth enclosure 33 is a square structure, and the combination of the fourth enclosure 33 and the first insulating member 3 forms a square receiving space, and the fourth protrusion 22 is square, so the fourth enclosure 33 can limit the rotation of the first insulating member 3 relative to the second cover plate 2.

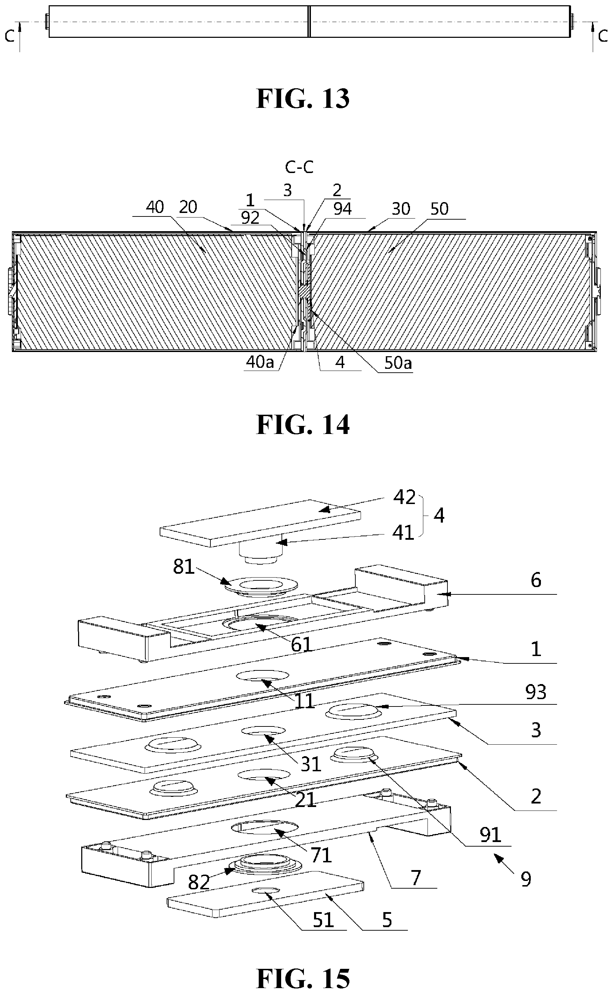

As shown in Figs. 13 and 14, it can be seen how the first electrode assembly 40 and the second electrode assembly 50 are connected to each other. A first tab 40a on the first electrode assembly 40 and a second tab 50a on the second electrode assembly 50 are electrically connected to each other via the end cover assembly 10, the other tab of the first electrode assembly 40 is connected to a terminal of the first end cover assembly 60, and the other tab of the second electrode assembly 50 is connected to a terminal of the second end cover assembly 70.

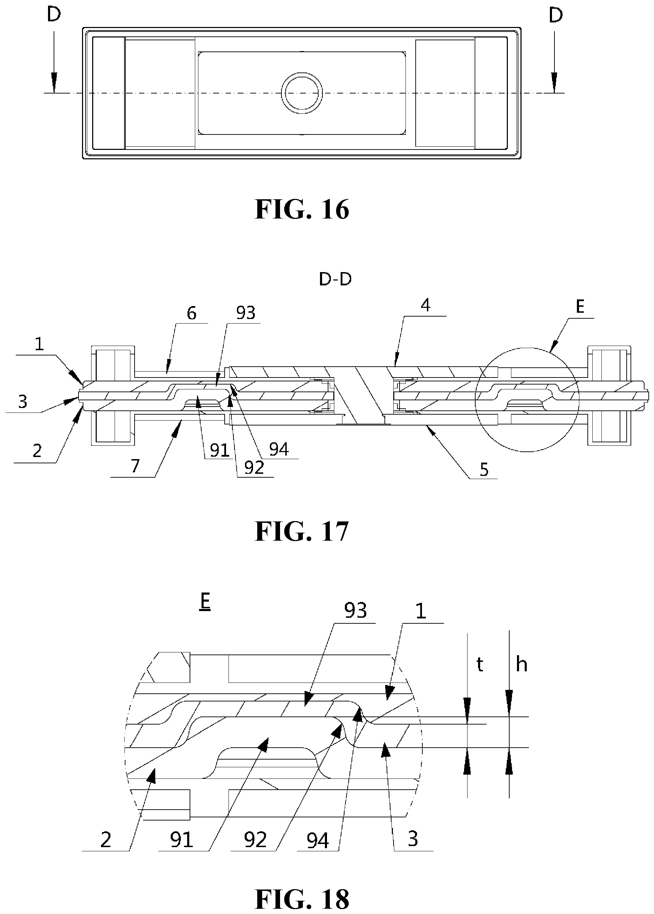

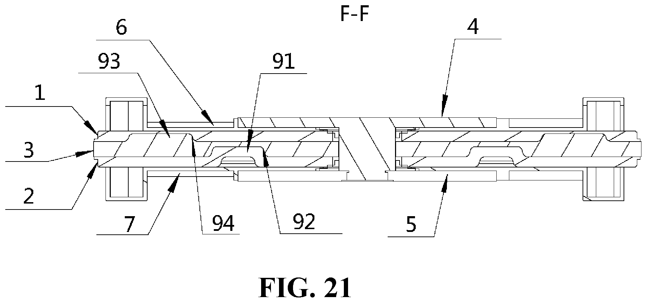

As shown in Figs. 15 to 21, in some embodiments, the anti-rotation device 9 includes a first anti-rotation portion 91 and a second anti-rotation portion 93. The first anti-rotation portion 91 is arranged between the first insulating member 3 and the first cover plate 1 and is configured to prevent the relative rotation between the first insulating member 3 and the first cover plate 1, and the second anti-rotation portion 93 is arranged between the first insulating member 3 and the second cover plate 2 and is configured for the relative rotation between the first insulating member 3 and the second cover plate 2.

In these embodiments, the arrangement of the first anti-rotation portion 91 between the first insulating member 3 and the first cover plate 1 can prevent the relative rotation between the first insulating member 3 and the first cover plate 1. The arrangement of the second anti-rotation portion 93 between the first insulating member 3 and the second cover plate 2 can prevent the relative rotation between the first insulating member 3 and the second cover plate 2. After the relative rotation between the first insulating member 3 and the first cover plate 1 and the relative rotation between the first insulating member 3 and the second cover plate 2 are respectively limited by the first anti-rotation portion 91 and the second anti-rotation portion 93, the torsion resistance between the first cover plate 1 and the second cover plate 2 is also improved, and the torsion resistance between the first housing 20 connected to the first cover plate 1 and the second housing 30 connected to the second cover plate 2 is thus also improved, so that for the battery cell equipped with the end cover assembly, the relative stability between the first cover plate and the second cover plate can be maintained, the torsion resistance of the entire battery cell can be effectively improved, and the structural stability of the battery cell can be improved.

In some embodiments, one of the first cover plate 1 and the first insulating member 3 is provided with a first groove 92, the other thereof is provided with the first anti-rotation portion 91, and the first anti-rotation portion 91 is embedded in the first groove 92; and
one of the second cover plate 2 and the first insulating member 3 is provided with a second groove 94, the other thereof is provided with the second anti-rotation portion 93, and the second anti-rotation portion 93 is embedded in the second groove 94.

In these embodiments, one of the first cover plate 1 and the first insulating member 3 is provided with the first anti-rotation portion 91 and the other thereof is provided with the corresponding first groove 92, and one of the first insulating member 3 and the second cover plate 2 is provided with the second anti-rotation portion 93 and the other thereof is provided with the corresponding second groove 94. Through the engagement between the first anti-rotation portion 91 and the first groove 92 and the engagement between the second anti-rotation portion 93 and the second groove 94, a better effect of preventing the relative rotation between the first cover plate 1 and the first insulating member 3 and between the first insulating member 3 and the second cover plate 2 is provided.

In the embodiments shown in Figs. 15 to 18, the first anti-rotation portion 91 is arranged on the second cover plate 2, the first anti-rotation portion 91 protrudes from a surface of the second cover plate 2 close to the first insulating member 3 in the direction approaching the first insulating member 3, the first groove 92 of the first insulating member 3, the first groove 92 extends from a side surface of the first insulating member 3 close to the second cover plate 2 in the direction approaching the first cover plate 1, and the first anti-rotation portion 91 is embedded in the first groove 92; and the second anti-rotation portion 93 is arranged on the first insulating member 3, the second anti-rotation portion 93 protrudes from a surface of the first insulating member 3 close to the first cover plate 1 in the direction approaching the first cover plate 1, the first cover plate 1 is provided with a second groove 94, the second groove 94 extends from a side surface of the first cover plate 1 close to the first insulating member 3 in a direction away from the first insulating member 3, and the second anti-rotation portion 93 is embedded in the second groove 94.

In these embodiments, the second cover plate 2 and the first insulating member 3 arranged adjacent to each other are respectively provided with the corresponding first anti-rotation portion 91 and first groove 92, while the first insulating member 3 and the first cover plate 1 arranged adjacent to each other are respectively provided with the corresponding second anti-rotation portion 93 and second groove 94, the first insulating member 3 provided with both the first groove 92 and the second anti-rotation portion 93 is located between the first cover plate 1 and the second cover plate 2, the protruding directions of the first anti-rotation portion 91 and the second anti-rotation portion 93 are the same, and two concave-convex engagement structures in the same direction are formed between the first cover plate 1, the first insulating member 3 and the second cover plate 2, so that a better effect of preventing the relative rotation between the first cover plate 1 and the first insulating member 3 and between the first insulating member 3 and the second cover plate 2 is provided.

In some other embodiments, the first anti-rotation portion 91 is provided on the first cover plate 1, the first insulating member 3 is provided with the first groove 92, the second anti-rotation portion 93 is provided on the first insulating member 3, the second cover plate 2 is provided with the second groove 94, the first anti-rotation portion 91 is embedded in the first groove 92, and the second anti-rotation portion 93 is embedded in the second groove 94. In these embodiments, two concave-convex engagement structures in the same direction are also formed between the first cover plate 1, the first insulating member 3 and the second cover plate 2, but the protruding direction of the concave-convex engagement structure is opposite to that of the concave-convex engagement structure in the embodiments as shown in Figs. 15 to 18.

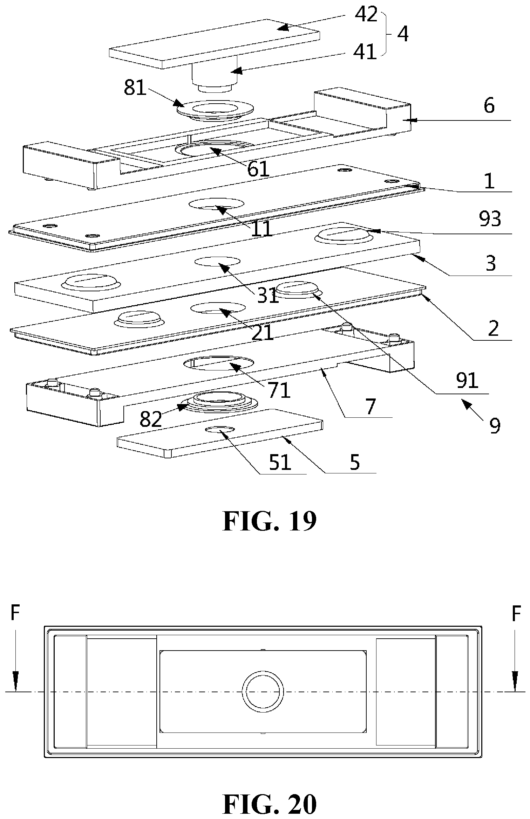

As shown in Figs. 19 to 21, in some embodiments, in a plane perpendicular to an embedding direction of the first anti-rotation portion 91, a projection of the first groove 92 and a projection of the second anti-rotation portion 93 are offset from each other.

In these embodiments, the projection of the first groove 92 and the projection of the second anti-rotation portion 93 are offset from each other, so that the engagement structure of the first anti-rotation portion 91 and the first groove 92 and the engagement structure of the second anti-rotation portion 93 and the second groove 94 are dispersed in different positions, thereby increasing the coverage of the anti-rotation device 9 and improving the anti-rotation effect.

As shown in Figs. 15 to 18, in some embodiments, in a plane perpendicular to an embedding direction of the first anti-rotation portion 91, a projection of the first groove 92 falls within the range of a projection of the second anti-rotation portion 93.

In these embodiments, the projection of the first groove 92 falls within the range of the projection of the second anti-rotation portion 93, that is, the first groove 92 is arranged directly below a protruding position of the second anti-rotation portion 93, and a recessed position of the first groove 92 is exactly opposed to the protruding position of the second anti-rotation portion 93, so that two concave-convex engagement structures nested with each other can be formed between the first cover plate 1, the first insulating member 3 and the second cover plate 2, thereby effectively enhancing the overall strength of the anti-rotation device 9 and improving the anti-rotation effect.

In some embodiments, the first groove 92 is provided on the first insulating member 3, the second groove 94 is provided on the second cover plate 2, and the first anti-rotation portion 91 at least partially extends into the second groove 94 in the embedding direction of the first anti-rotation portion 91.

In these embodiments, at least part of the first anti-rotation portion 91 can extend into the second groove 94, that is, the depth h of the first groove 92 is greater than the thickness t of the first insulating member 3, so that part of the second groove 94 is situated in the first groove 92, and the second anti-rotation portion 93 is located between a groove wall of the first groove 92 and a groove wall of the second groove 94. Such an arrangement has the advantages that the first groove 92 may include a part that is higher than the side surface of the first insulating member 3 close to the second cover plate 2, this part may be embedded in the second groove 94 provided on the second cover plate 2, and the first anti-rotation portion 91 engaged with the first groove 92 can thus also partially enter the second groove 94, so that the torsional force on the first cover plate 1 can be directly transferred to the second cover plate 2 through the first anti-rotation portion 91 by means of the second anti-rotation portion 93 of the first insulating member 3, thereby reducing the strength requirements for the first insulating member 3 and allowing the thickness of the first insulating member 3 to be appropriately reduced.

In some embodiments, in the embedding direction of the first anti-rotation portion 91, the part of the first anti-rotation portion 91 that extends into the second groove 94 has an extension dimension greater than or equal to 0.2 mm.

In these embodiments, the part of the first anti-rotation portion 91 that extends into the second groove 94 has an extension dimension greater than or equal to 0.2 mm, that is, the difference between the depth h of the first groove 92 and the thickness t of the first insulating member 3 is greater than or equal to 0.2 mm, so that the torsional force on the first cover plate 1 can be directly transferred to the second cover plate 2 through the first anti-rotation portion 91, thereby improving the effects of force transfer and anti-rotation.

In various embodiments of the present application, the shapes of the first anti-rotation portion 91 and the second anti-rotation portion 93 may be selected in various ways, such as a cylindrical shape, a square shape, and the like. The shapes of the first groove 92 and the second groove 94 match the shapes of the first anti-rotation portion 91 and the second anti-rotation portion 93 respectively.

As shown in Fig. 6, in some embodiments, the end cover assembly 10 further includes a first conductive member 4 and a second conductive member 5. The second conductive member 5 is arranged on the side of the second cover plate 2 away from the first insulating member 3, and the first conductive member 4 includes a connecting post 41 and a limiting portion 42. The limiting portion 42 is arranged on the side of the first cover plate 1 away from the first insulating member 3. The first cover plate 1 is provided with a first through hole 11, the second cover plate 2 is provided with a second through hole 21, and the first insulating member 3 is provided with a third through hole 31. The connecting post 41 passes through the first through hole 11, the third through hole 31 and the second through hole 21 in sequence, and is connected to the second conductive member 5. The limiting portion 42 is configured to limit the movement of the first conductive member 4 in an axis direction of the first through hole 11.

In these embodiments, the electrical connection between the first electrode assembly 40 in the first housing 20 and the second electrode assembly 50 in the second housing 30 is realized by means of the first conductive member 4 and the second conductive member 5.

In some embodiments, the second conductive member 5 is provided with a fourth through hole 51, and the connecting post 41 passes through the fourth through hole 51 to realize the connection between the first conductive member 4 and the second conductive member 5.

In some embodiments, the end cover assembly 10 further includes a second insulating member 6 and a third insulating member 7. The second insulating member 6 is arranged between the first cover plate 1 and the limiting portion 42, and the third insulating member 7 is arranged between the second cover plate 2 and the second conductive member 5. The second insulating member 6 is provided with a fifth through hole 61, the third insulating member 7 is provided with a sixth through hole 71, and the connecting post 41 passes through the fifth through hole 61 and the sixth through hole 71.

In these embodiments, the second insulating member 6 can electrically isolate the first cover plate 1 from the limiting portion 42 of the first conductive member 4; and the third insulating member 7 can electrically isolate the second cover plate 2 from the second conductive member 5.

In some embodiments, the end cover assembly 10 further includes a first sealing member 81, the first sealing member 81 is arranged between the limiting portion 42 and the second insulating member 6, the first sealing member 81 is provided with a seventh through hole, the connecting post 41 passes through the seventh through hole, and the first sealing member 81 is axially embedded in the fifth through hole 61 and the first through hole 11 to isolate the first cover plate 1 from the limiting portion 42 and the first cover plate 1 from the connection post 41; and/or the end cover assembly further includes a second sealing member 82, the second sealing member 82 is arranged between the second conductive member 5 and the third insulating member 7, the second sealing member 82 is provided with an eighth through hole, the connecting post 41 passes through the eighth through hole, and the second sealing member 82 is axially embedded in the sixth through hole 71 and the second through hole 21 to isolate the second cover plate 2 from the second conductive member 5 and the second cover plate 2 from the connecting post 41.

In these embodiments, with the arrangement of the first sealing member 81, it is possible to tightly connect the limiting portion 42 of the first conductive member 4 to the second insulating member 6 in an axial direction, to isolate the limiting portion 42 of the first conductive member 4 from the first cover plate 1 in the axial direction, and to isolate the first cover plate 1 from the connecting post 41 of the first conductive member 4 in a radial direction. With the arrangement of the second sealing member 82, it is possible to tightly connect the second conductive member 5 to the third insulating member 7 in an axial direction, to isolate the second conductive member 5 from the second cover plate 2 in the axial direction, and to isolate the second cover plate 2 from the connecting post 41 of the first conductive member 4 in a radial direction.

The embodiments of the battery cell and the end cover assembly provided by the present application will be described below with reference to Figs. 3 to 21.

As shown in Figs. 3 and 4, the battery cell includes an end cover assembly 10, a first housing 20, a second housing 30, a first electrode assembly 40, a second electrode assembly 50, a first end cover assembly 60 and second end cover assembly 70.

The first housing 20 and the second housing 30 both have openings, the first electrode assembly 40 is received inside the first housing 20, and the second electrode assembly 50 is received inside the second housing 30.

The opening of the first housing 20 is arranged opposite the opening of the second housing 30, and the end cover assembly 10 is arranged between the first housing 20 and the second housing 30. The first end cover assembly 60 is arranged at one end of the first housing 20 that is away from the opening thereof, and the second end cover assembly 70 is arranged at one end of the second housing 30 that is away from the opening thereof.

The first housing 20 and the second housing 30 are both square housings.

As shown in Figs. 5 to 7, the end cover assembly includes a first cover plate 1, a second cover plate 2, a first insulating member 3, a first conductive member 4, a second conductive member 5, a second insulating member 6, a third insulating member 7, a first sealing member 81, and a second sealing member 82.

The first insulating member 3 is arranged between the first cover plate 1 and the second cover plate 2 to insulate the first cover plate 1 from the second cover plate 2.

The second insulating member 6 is arranged on the side of the first cover plate 1 away from the first insulating member 3, and the third insulating member 7 is arranged on the side of the second cover plate 2 away from the first insulating member 3. The first conductive member 4 includes a connecting post 41 and a limiting portion 42. The limiting portion 42 is arranged on the side of the second insulating member 6 away from the first cover plate 1. The connecting post 41 is connected to the side of the limiting portion 42 close to the second insulating member 6. The second conductive member 5 is arranged on the side of the third insulating member 7 away from the second cover plate 2.

The first cover plate 1 is provided with a first through hole 11, the second cover plate 2 is provided with a second through hole 21, the first insulating member 3 is provided with a third through hole 31, and the second conductive member 5 is provided with a fourth through hole 51, the second insulating member 6 is provided with a fifth through hole 61, the third insulating member 7 is provided with a sixth through hole 71, the first sealing member 81 is provided with a seventh through hole, and the second sealing member 82 is provided with an eighth through hole. The connecting post 41 passes through the seventh through hole, the fifth through hole 61, the first through hole 11, the third through hole 31, the second through hole 21, the sixth through hole 71, the eighth through hole and the fourth through hole 51 in sequence, and is connected to the second conductive member 5. The limiting portion 42 is configured to limit the movement of the first conductive member 4 in an axis direction of the first through hole 11.

The first cover plate 1, the second cover plate 2, the first insulating member 3, the limiting portion 42 of the first conductive member 4, the second conductive member 5, the second insulating member 6 and the third insulating member 7 are all in a square shape.

A first electrode assembly 40 in the first housing 20 and a second electrode assembly 50 in the second housing 30 are electrically connected to each other via the first conductive member 4 and the second conductive member 5.

The first sealing member 81 is arranged between the limiting portion 42 and the second insulating member 6, so that it is possible to tightly connect the limiting portion 42 of the first conductive member 4 to the second insulating member 6 in an axial direction, to isolate the limiting portion 42 of the first conductive member 4 from the first cover plate 1 in the axial direction, and to isolate the first cover plate 1 from the connecting post 41 of the first conductive member 4 in a radial direction. The second sealing member 82 is arranged between the second conductive member 5 and the third insulating member 7, so that it is possible to tightly connect the second conductive member 5 to the third insulating member 7 in an axial direction, to isolate the second conductive member 5 from the second cover plate 2 in the axial direction, and to isolate the second cover plate 2 from the connecting post 41 of the first conductive member 4 in a radial direction.

In the embodiments shown in Figs. 5 to 7, the part of the connecting post 41 that passes through the first through hole 11 is a square structure, and the first through hole 11 is a square hole that is non-rotatably engaged with the square structure, so as to limit the relative rotation between the connecting post 41 and the first cover plate 1; and the part of the connecting post 41 that passes through the second through hole 21 is a square structure, and the second through hole 21 is a square hole that is non-rotatably engaged with the square structure, so as to limit the relative rotation between the connecting post 41 and the second through hole 21, thereby achieving the purpose of limiting the relative rotation between the first cover plate 1 and the second cover plate 2.

In the embodiment shown in Fig. 8, the first insulating member 3 is fixedly bonded to the first cover plate 1 via a first bonding structure 1a, and the first insulating member 3 is fixedly bonded to the second cover plate 2 via a second bonding structure 2a. In this embodiment, the relative fixation between the first cover plate 1 and the first insulating member 3 is realized by means of the first bonding structure 1a, and the relative fixation between the second cover plate 2 and the first insulating member 3 is realized by means of the second bonding structure 2a, so as to achieve the purpose of preventing the relative rotation between the first cover plate 1 and the second cover plate 2.

In the embodiments shown in Figs. 9 to 11, the anti-rotation device 9 includes a first enclosure 12 and a fourth enclosure 33. The first enclosure 12 is arranged at an edge of the first cover plate 1 in a circumferential direction of the first cover plate 1. The first insulating member 3 includes a first protrusion 32. The first protrusion 32 is received in a recess formed by the combination of the first enclosure 12 and the first cover plate 1, so as to limit the relative rotation between the first cover plate 1 and the first insulating member 3. The fourth enclosure 33 is arranged at an edge of the first insulating member 3 in a circumferential direction of the first insulating member 3. The second cover plate 2 includes a fourth protrusion 22. The fourth protrusion 22 is received in a recess formed by the combination of the fourth enclosure 33 and the first insulating member 3, so as to limit the relative rotation between the second cover plate 2 and the first insulating member 3, thereby achieving the purpose of preventing the relative rotation between the first cover plate 1 and the second cover plate 2.

In the embodiment shown in Fig. 12, the anti-rotation device 9 includes a second enclosure 35 and a third enclosure 23. The second enclosure 35 is arranged at an edge of the first insulating member 3 in a circumferential direction of the first insulating member 3. The first cover plate 1 includes a second protrusion 13. The second protrusion 13 is received in a recess formed by the combination of the second enclosure 35 and the first insulating member 3, so as to limit the relative rotation between the first cover plate 1 and the first insulating member 3. The third enclosure 23 is arranged at an edge of the second cover plate 2 in a circumferential direction of the second cover plate 2. The first insulating member 3 includes a third protrusion 34. The third protrusion 34 is received in a recess formed by the combination of the third enclosure 23 and the second cover plate 2, so as to limit the relative rotation between the second cover plate 2 and the first insulating member 3, thereby achieving the purpose of preventing the relative rotation between the first cover plate 1 and the second cover plate 2.

As shown in Figs. 13 and 14, a first tab 40a on the first electrode assembly 40 and a second tab 50a on the second electrode assembly 50 are electrically connected to each other via the end cover assembly 10, the other tab of the first electrode assembly 40 is connected to a terminal of the first end cover assembly 60, and the other tab of the second electrode assembly 50 is connected to a terminal of the second end cover assembly 70.

In the embodiments shown in Figs. 15 to 18, the anti-rotation device 9 includes a first anti-rotation portion 91 and a second anti-rotation portion 93. The first anti-rotation portion 91 is provided on the second cover plate 2, the first insulating member 3 is provided with the first groove 92, the second anti-rotation portion 93 is provided on the first insulating member 3, the first cover plate 1 is provided with the second groove 94, the first anti-rotation portion 91 is embedded in the first groove 92, and the second anti-rotation portion 93 is embedded in the second groove 94. In these embodiments, the purpose of preventing the relative rotation between the first cover plate 1 and the second cover plate 2 is achieved through the engagement of the first anti-rotation portion 91 and the first groove 92 and the engagement of the second anti-rotation portion 93 and the second groove 94.

In some other embodiments, the first anti-rotation portion 91 is provided on the first cover plate 1, the first insulating member 3 is provided with the first groove 92, the second anti-rotation portion 93 is provided on the first insulating member 3, the second cover plate 2 is provided with the second groove 94, the first anti-rotation portion 91 is embedded in the first groove 92, and the second anti-rotation portion 93 is embedded in the second groove 94. In these embodiments, the purpose of preventing the relative rotation between the first cover plate 1 and the second cover plate 2 is also achieved through the engagement of the first anti-rotation portion 91 and the first groove 92 and the engagement of the second anti-rotation portion 93 and the second groove 94, but the protruding direction of the concave-convex engagement structure is opposite to that of the concave-convex engagement structure in the embodiments as shown in Figs. 15 to 18.

In the embodiments shown in Figs. 15 to 18, in a plane perpendicular to an embedding direction of the first anti-rotation portion 91, a projection of the first groove 92 falls within the range of a projection of the second anti-rotation portion 93.

In the embodiments shown in Figs. 19 to 21, in a plane perpendicular to an embedding direction of the first anti-rotation portion 91, a projection of the first groove 92 and a projection of the second anti-rotation portion 93 are offset from each other.

In the embodiments of the end cover assembly provided by the present application, with the arrangement of the anti-rotation device, it is possible to effectively prevent the relative rotation between the first cover plate and the second cover plate, and thus to prevent the relative rotation between the first housing connected to the first cover plate and the second housing connected to the second cover plate, thereby improving the torsion resistance of the entire battery cell and improving the quality of the battery cell. It is also possible to prevent the leakage of an electrolyte from an electrode assembly in the housing due to torsion, which may cause safety accidents.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. An end cover assembly (10), comprising:
a first cover plate (1) configured to close a first housing (20);
a second cover plate (2) configured to close a second housing (30), the second cover plate (2) and the first cover plate (1) being arranged opposite to each other in a first direction; and
an anti-rotation device (9) configured to prevent a relative rotation between the first cover plate (1) and the second cover plate (2).

2. The end cover assembly (10) according to claim 1, further comprising a first insulating member (3) arranged between the first cover plate (1) and the second cover plate (2), such that the first cover plate (1) and the second cover plate (2) are insulated from each other.

3. The end cover assembly (10) according to claim 1 or 2, wherein the anti-rotation device (9) comprises a connecting post (41), the first cover plate (1) is provided with a first through hole (11), the second cover plate (2) is provided with a second through hole (21), one end of the connecting post (41) passes through the first through hole (11) and is configured to be electrically connected to a first electrode assembly (40) in the first housing (20), the other end of the connecting post (41) the second through hole (21) and is configured to be electrically connected to a second electrode assembly (50) in the second housing (30), and the connecting post (41) is non-rotatably engaged with the first through hole (11) and the second through hole (21) respectively.

4. The end cover assembly (10) according to claim 3, wherein the part of the connecting post (41) passing through the first through hole (11) and the part of the connecting post (41) passing through the second through holes (21) are respectively square structures, and the first through hole (11) and the second through hole (21) are respectively square holes non-rotatably engaged with the corresponding square structures.

5. The end cover assembly (10) according to any one of claims 2 to 4, wherein the anti-rotation device (9) comprises:
a first bonding structure (1a), the first insulating member (3) being fixedly bonded to the first cover plate (1) via the first bonding structure (1a); and
a second bonding structure (2a), the first insulating member (3) being fixedly bonded to the second cover plate (2) via the second bonding structure (2a).

6. The end cover assembly (10) according to any one of claims 2 to 5, wherein one of the first cover plate (1) and the first insulating member (3) has a periphery provided with a first enclosure structure, and the other thereof has a side wall abutting against a side wall of the first enclosure structure to limit a relative rotation between the first cover plate (1) and the first insulating member (3); and
one of the second cover plate (2) and the first insulating member (3) has a periphery provided with a second enclosure structure, and the other thereof has a side wall abutting against a side wall of the second enclosure structure to limit a relative rotation between the second cover plate (2) and the first insulating member (3).

7. The end cover assembly (10) according to any one of claims 2 to 6, wherein the anti-rotation device (9) comprises a first anti-rotation portion (91) and a second anti-rotation portion (93), wherein the first anti-rotation portion (91) is arranged between the first insulating member (3) and the first cover plate (1) and is configured to prevent the relative rotation between the first insulating member (3) and the first cover plate (1), and the second anti-rotation portion (93) is arranged between the first insulating member (3) and the second cover plate (2) and is configured for the relative rotation between the first insulating member (3) and the second cover plate (2).

8. The end cover assembly (10) according to claim 7, wherein one of the first cover plate (1) and the first insulating member (3) is provided with a first groove (92), the other thereof is provided with the first anti-rotation portion (91), and the first anti-rotation portion (91) is embedded in the first groove (92); and
one of the second cover plate (2) and the first insulating member (3) is provided with a second groove (94), the other thereof is provided with the second anti-rotation portion (93), and the second anti-rotation portion (93) is embedded in the second groove (94).

9. The end cover assembly (10) according to claim 8, wherein in a plane perpendicular to an embedding direction of the first anti-rotation portion (91), a projection of the first groove (92) and a projection of the second anti-rotation portion (93) are offset from each other.

10. The end cover assembly (10) according to claim 8, wherein in a plane perpendicular to an embedding direction of the first anti-rotation portion (91), the projection of the first groove (92) falls within the range of the projection of the second anti-rotation portion (93).

11. The end cover assembly (10) according to claim 10, wherein the first groove (92) is provided on the first insulating member (3), the second groove (94) is provided on the second cover plate (2), and the first anti-rotation portion (91) at least partially extends into the second groove (94) in the embedding direction of the first anti-rotation portion (91).

12. The end cover assembly (10) according to claim 11, wherein in the embedding direction of the first anti-rotation portion (91), the part of the first anti-rotation portion (91) that extends into the second groove (94) has an extension dimension greater than or equal to 0.2 mm.

13. A battery cell (101), comprising an end cover assembly (10) of any one of claims 1 to 12.

14. A battery (100), comprising a box (102) and a battery cell (101) of claim 13, wherein the battery cell (101) is arranged in the box (102), and the battery cell (101) is configured to supply electric energy.

15. An electrical apparatus, comprising a battery cell (101) of claim 13, the battery cell (101) being configured to supply electric energy to the electrical apparatus; or comprising a battery (100) of claim 14, the battery (100) being configured to supply electric energy to the electrical apparatus.
